# EUROPEAN PATENT APPLICATION

(11) **EP 1 895 408 A1**
(43) Date of publication of application: **05.03.2008**
(21) Application number: 07075687.9
(22) Date of filing: 15.08.2007
(51) Int. Cl.: G06F 9/44

(54) **Method of re-using software attributes in graphical programs**

(30) Priority: 18.08.2006 US 506554
(71) Applicant: Delphi Technologies, Inc., Troy, Michigan 48007 (US)
(72) Inventor: Vitkin, Lev M., Carmel, IN 46032 (US); Dong, Susan, Plymouth, MI 48170 (US); Chandrashekar, MS, 560070 Bangalore (IN); Madhusudhan, I.P., 560016 Bangalore (IN); Rao, Ganesh S., 560050 Bangalore (IN); Manjunath, B. C. c/o Channeshi S.B., Bhuvaneshwari Nagar (IN)
(74) Representative: Denton, Michael John

(57) **Abstract**

Software attributes assigned to graphical objects of a graphical program (10) are automatically reapplied to graphical objects of a modified version (20) of the graphical program to enable concurrent graphical program development and automatic code generation. Changes between original and modified versions of graphical program are ascertained and software attributes from objects of the original version (10) are copied to objects of the modified version (20) where appropriate (130, 134). Unique static identification codes are assigned to the objects of the original and modified graphical programs (102, 104), and are used as a basis for determining if the software attributes from the original version (10) can be applied to the objects in the modified version (20).

## Description

### TECHNICAL FIELD

The present invention relates to graphical programming, and more particularly to a method for automating reuse of software attributes in successive versions of a graphical program.

### BACKGROUND OF THE INVENTION

Traditionally, computer program code for implementing an algorithm is generated by a software specialist based on a written specification supplied by an algorithm specialist. The software specialist manually produces a set of high-level program instructions using a programming language such as Basic, C, C++, or Pascal, and then uses a compiler to convert the high-level program instructions into machine-executable code.

The manual coding process described above has fallen out of usage in many organizations due to the advent graphical programming tools that allow the algorithm specialist to describe the algorithm using predefined graphical objects in place of the traditional written specification. The software specialist assigns software attributes to the graphical program objects and uses automatic code generating software (i.e., an auto-code tool) to convert the graphical-based description of the algorithm to a set of high-level programming language instructions (referred to as auto-code). A compiler is then used to convert the high-level program instructions into machine-executable code. Examples of graphical programming tools include MATLAB/Simulink/Stateflow from The Mathworks, Inc. and Statemate from iLogix, Inc. Examples of auto-code tools include RTW E-coder from The Mathworks, Inc., TargetLink from dSPACE, Inc., and Rhapsody from iLogix, Inc.

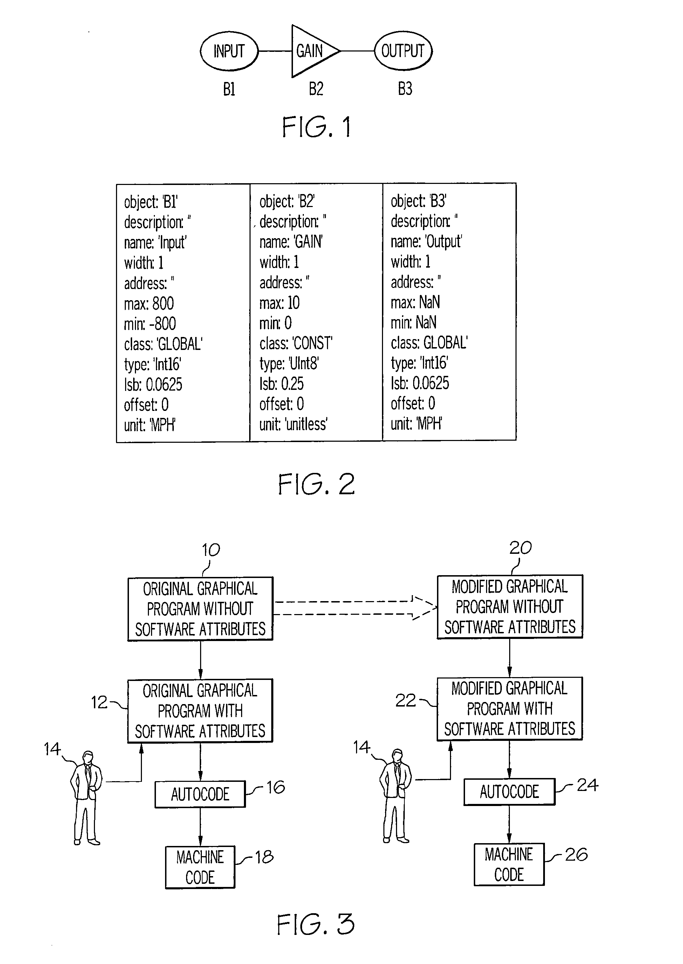

FIGS. 1-2 illustrate the auto-coding process. FIG. 1 depicts a fragment of a graphical program comprising graphical objects B1, B2 and B3, and FIG. 2 depicts a table of software attributes for the objects B1, B2 and B3. The illustrated graphical program represents the simple calculation: (Input * GAIN = Output). With the software attributes specified in FIG. 2, an auto-code tool will generate the following instruction set in C-code:
Output = (Int16) ((((Int32) Input) * ((Int32) GAIN)) >> 2), where
const UInt8 GAIN = 20 /* 5. */ /* LSB: 2^-2 OFF: 0 MIN/MAX: 0 .. 10 */;
Int16 Input /* LSB: 2^-4 OFF: 0 MIN/MAX: -800 .. 800 */;
Int16 Output /* LSB: 2^-4 OFF: 0 MIN/MAX: -2048 .. 2047.9375 */;

In the development of an algorithm, the algorithm specialist will periodically revise the graphical program to change or add functionality, and automatic code generation is required for each new version of the graphical program in order to evaluate the revised algorithm. The diagram of FIG. 3 illustrates the usual process. The reference numeral 10 designates the original version of a graphical program (such as depicted in FIG. 1) devised by an algorithm specialist. The graphical program 10 is supplied to a software specialist 14, who produces an auto-code ready form 12 of the graphical program 10 -- that is, a graphical program that includes a set of software attributes for each object of the graphical program 10. An auto-code tool is then used to generate corresponding auto-code 16 in C or some other high-level programming language, and a compiler is used to generate corresponding machine-executable code 18. The algorithm specialist evaluates the algorithm using the machine-executable code 18, revises the graphical program 10 based on the evaluation or on changes in the desired functionality of the algorithm, and supplies a revised graphical program 20 to the software specialist 14. The software specialist 14 then produces an auto-code ready form 22 of the graphical program 20, generates corresponding auto-code 24 using the auto-code tool, and generates corresponding machine-executable code 26 using a compiler. This process may be repeated numerous times during development of the algorithm, placing a large burden on the software specialist 14 and significantly delaying the algorithm development.

The most time-consuming part of the software specialist's task in the above-described process is the repeated assignment of software attributes with each revision of the graphical program. A certain amount of analysis is required to determine the software attribute values for some objects, especially in math-intensive and fixed-point algorithms. And the efficiency and reliability of the auto-code depends on the skill level of the software specialist 14 who utilizes the auto-code tool. In some cases, the software specialist 14 can save time by reusing at least some of the software attributes generated for the previous version of the graphical program, but this requires a careful and meticulous comparison of the original and modified versions, which is both time-consuming and error-prone. Accordingly, what is needed is a method of automating the re-use of stored software attributes among different versions of a graphical program.

### SUMMARY OF THE INVENTION

The present invention provides an improved method for automated reuse of software attributes among different versions of a graphical program to enable concurrent graphical program development and autocode generation. Changes between original and modified versions of graphical program are ascertained and software attributes from objects of the original version are copied to objects of the modified version where appropriate. Unique static identification codes are assigned to the objects of the original and modified graphical programs, and are used as a basis for determining if the software attributes from the original version can be applied to the objects in the modified version.

### BRIEF DESCRIPTION OF THE DRAWINGS

FIG. 1 is a fragment of an exemplary graphical program comprising graphical objects;

FIG. 2 is a table of software attributes for the graphical objects of FIG. 1;

FIG. 3 is a diagram illustrating a conventional algorithm development process using a graphical programming tool and an auto-code tool;

FIG. 4 is a diagram illustrating an algorithm development process using a graphical programming tool, an auto-code tool and the software attribute re-use method of the present invention;

FIGS. 5A and 5B together depict a flow diagram representative of a software routine for carrying out the method of this invention;

FIG. 6A depicts an original version of a first exemplary graphical program;

FIG. 6B depicts a modified version of the first exemplary graphical program of FIG. 6A;

FIG. 7 depicts a data table developed according to the method of this invention for the original graphical program of FIG. 6A;

FIGS. 8A, 8B, 8C, 8D and 8E depict successive stages in the development of a data table according to the method of this invention for the modified graphical program of FIG. 6B;

FIG. 9A depicts an original version of a second exemplary graphical program;

FIG. 9B depicts a modified version of the second exemplary graphical program of FIG. 9A;

FIG. 10 depicts a data table developed according to the method of this invention for the original graphical program of FIG. 9A;

FIGS. 11A, 11B, 11C, 11D, 11E and 11F depict successive stages in the development of a data table according to the method of this invention for the modified graphical program of FIG. 9B.

### DESCRIPTION OF THE PREFERRED EMBODIMENT

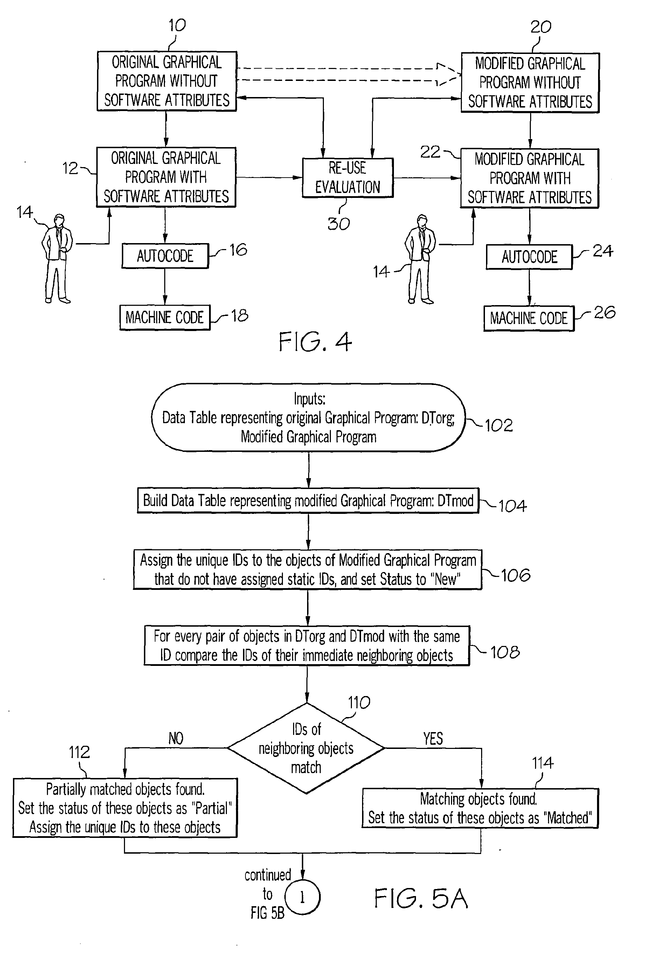

As described above, the objective of the present invention is to provide a method of automatically integrating the software attributes generated for a graphical program into a modified version of the graphical program in order to reduce the burden on the software specialist 14 and streamline the algorithm development process. The new process is illustrated by the diagram of FIG. 4, where blocks in common with the diagram of FIG. 3 have been assigned the same reference numerals. A Re-Use Evaluation Tool 30 embodying the method of the present invention compares the original and revised versions 10, 20 of the graphical program, and where appropriate, applies the software attributes of the auto-code ready program 12 to the auto-code ready program 22. The software specialist 14 assigns software attributes only to the objects of revised graphical program 20 that either did not exist in the original graphical program 10, or that were re-positioned in the revised graphical program 20 in such a way that software attributes previously assigned to the object are no longer applicable. Of course, it will be understood that the term "original" as used herein signifies not only the first version in the development of a graphical program, but any current version.

In general, the Re-Use Evaluation Tool 30 assigns a unique static (i.e., unchangeable) identification code to each object of the graphical program during the algorithm development cycle, and compares the objects using the assigned identification codes. The identification codes (referred to herein simply as IDs) are not re-usable during the development cycle. In other words, even if an object is removed from the graphical program, the ID of that object is not assigned to other object. Preferably, the "description" field of the software attribute for a given object is used to store the unique static ID for that object. The method carried out by Re-Use Evaluation Tool 30 is outlined by the flow diagram of FIGS**.** 5A-5B.

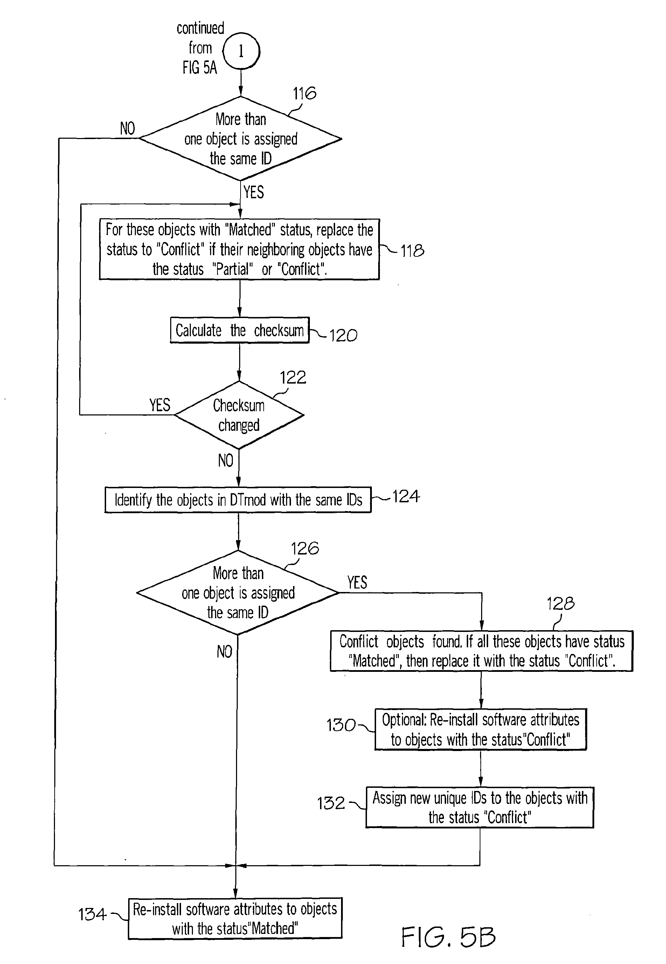

Referring to the flow diagram of FIGS. 5A-5B, block 102 assembles the inputs: (1) a data table DTorg describing the original version 10 of the graphical program; and (2) the modified graphical program 20. The process of assembling DTorg involves assigning a static ID to each unidentified object of the current version (all of the objects are unidentified when the current version is the original version) and specifying relationships among the objects. The table columns for each object include: (1) Object Name; (2) Object ID; (3) Input-Connected Object IDs; (4) Output-Connected Object IDs; (5) Object Status; and (6) Software Attributes. The Status is initially unknown, and the Software Attributes are the attribute values previously assigned by the software specialist 14 (for example, as shown in the table of FIG. 2).

Block 104 assembles a data table DTmod for the modified version 20 of the graphical program. The table DTmod has the same columns as DTorg, and the IDs of objects that are also present in the original graphical program 10 are copied into DTmod. Block 106 then assigns a static ID to each object of the modified graphical program that does not have an ID, sets the Status of such objects to New, and updates DTmod accordingly. It is possible at this stage for different graphical objects to have the same ID code; this happens when the algorithm specialist uses a Copy & Paste operation to copy a graphical object from the original version 10 into the modified version 20.

If one or more objects of the original program 10 are reproduced (by Copy & Paste) to form the modified program 20, DTmod will include one or more graphical objects with the same static ID code as in DTorg. Block 108 identifies each such pair objects and compares the ID codes of their neighboring objects (i.e., Input-Connected Objects and Output-Connected Objects). In each case, block 110 determines if the IDs of the neighboring objects in DTorg are also found in DTmod. If so, it is concluded that the DTmod object corresponds to the DTorg object, and block 114 sets the Status of the DTmod object to Matched. If block 110 is answered in the negative, block 112 sets the Status of the DTmod object to Partial and assigns it a new ID code.

The block 116 determines if DTmod still includes more than one object with the same ID code. If not, the block 134 identifies every object of DTmod whose Status is Matched, and copies the software attributes for that object from DTorg to DTmod, completing the method. However, if DTmod still includes more than one object with the same ID code, blocks 118-122 are executed to define a recursive process for processing those objects to identify possible conflicts for purposes of software attribute re-use. For each set of objects having the same ID code, block 118 determines their Status and the Status of their neighboring objects. If an object whose Status is Matched is neighbored to an object whose Status is Partial or Conflict, block 118 changes the Status of that object from Matched to Conflict. If a given object has more than one Output-Connected objects, and the Status of at least one of the Output-Connected objects is Matched, then the Status of the given object is not changed. Block 120 calculates a checksum of the Status column of DTmod using the numeric values 1, 2, 3 and 4 for the respective Status categories Matched, Partial, Conflict and New. Block 122 determines if the checksum value has changed since it was last calculated; this will occur if one or more entries in the Status column change due to the operation of block 118. After block 118 has processed all objects in DTmod having the same ID code, the checksum value will remain unchanged, and the recursive process of blocks 118-122 will be completed.

Once the recursive process of blocks 118-122 is completed, the blocks 124-126 determine if DTmod still contains more than one object with the same ID code. If not, the block 134 identifies every object of DTmod whose Status is Matched, and copies the software attributes for that object from DTorg to DTmod, completing the method. However, if DTmod still includes more than one object with the same ID code, blocks 128-132 are executed prior to block 134. If the Status of same-ID objects is Matched, block 128 changes their Status to Conflict, signifying that it cannot be determined which of the objects corresponds to an object in the original program. The block 130 is optional, and copies software attributes from DTorg into DTmod for objects having the same ID but whose Status is Conflict based on ID code, subject to authorization by the software specialist 14. The block 132 then assigns a new ID code to any object whose Status is Conflict. Finally, the modified auto-code ready program 22 is populated with the software attributes from DTmod based on the object ID codes. If desired, the objects in the modified auto-code ready program 22 can be visibly distinguished by Status to assist the software specialist 14.

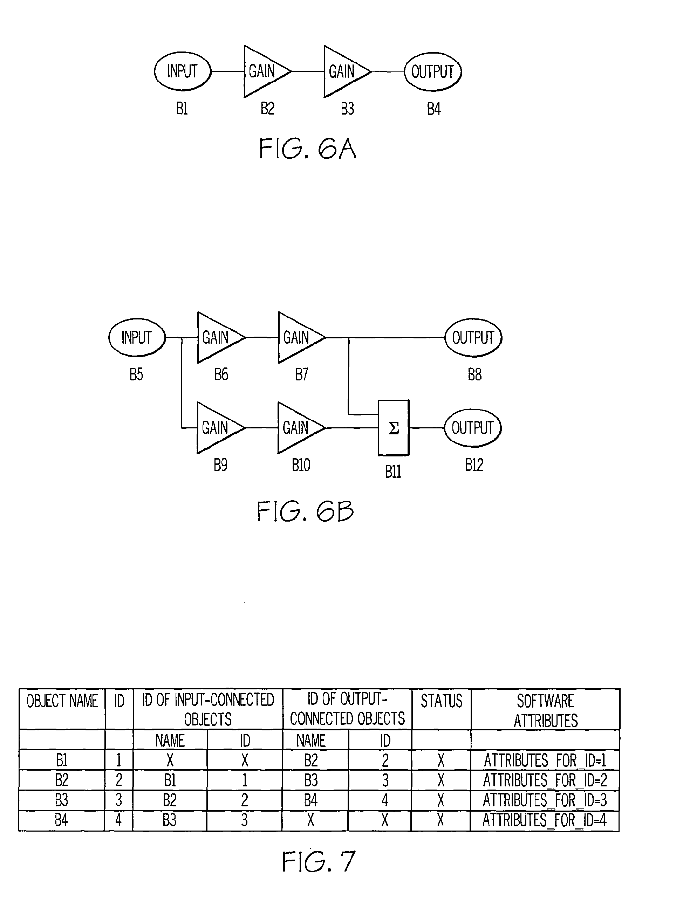

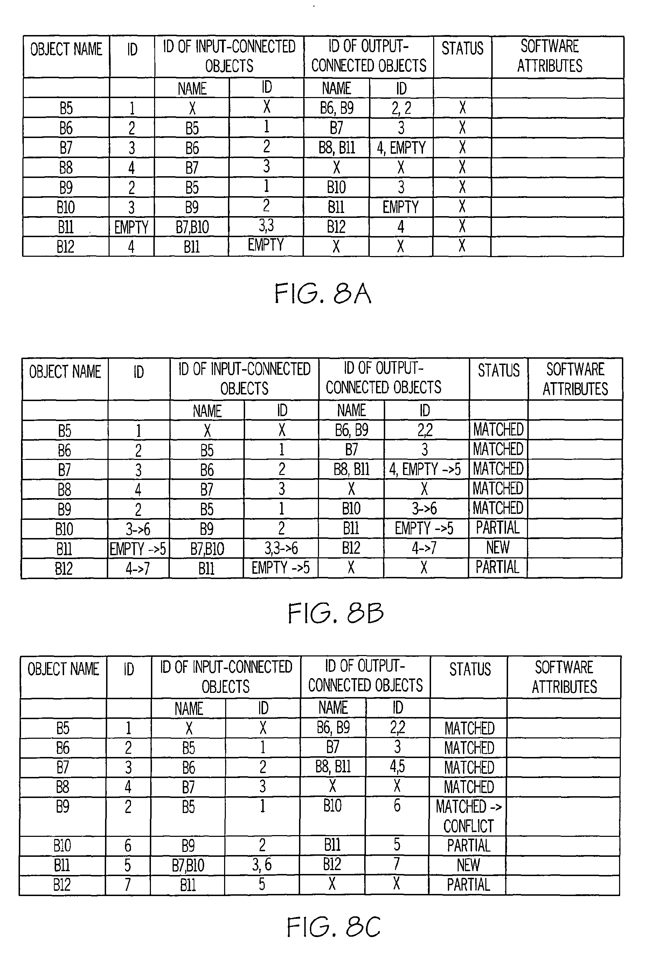

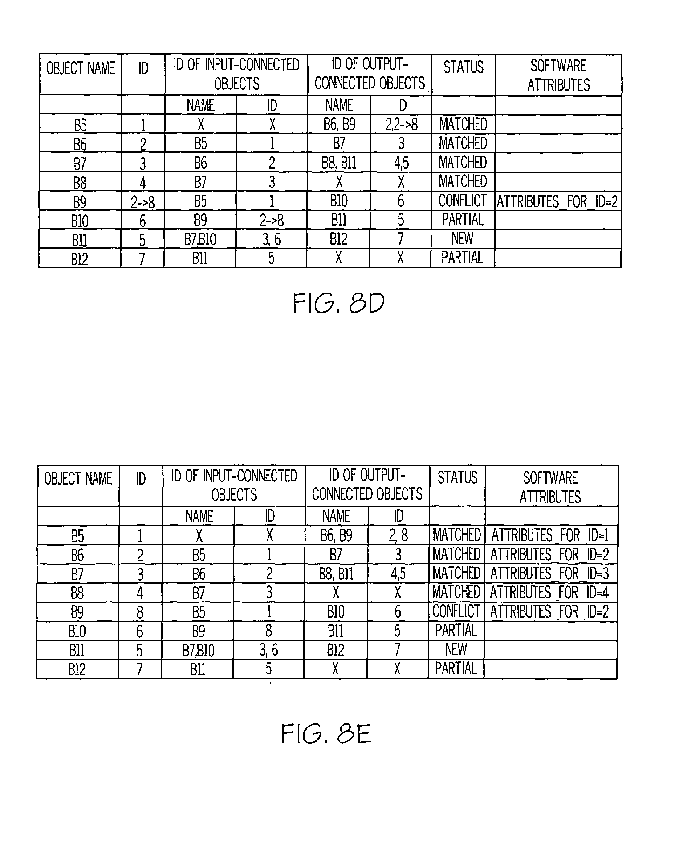

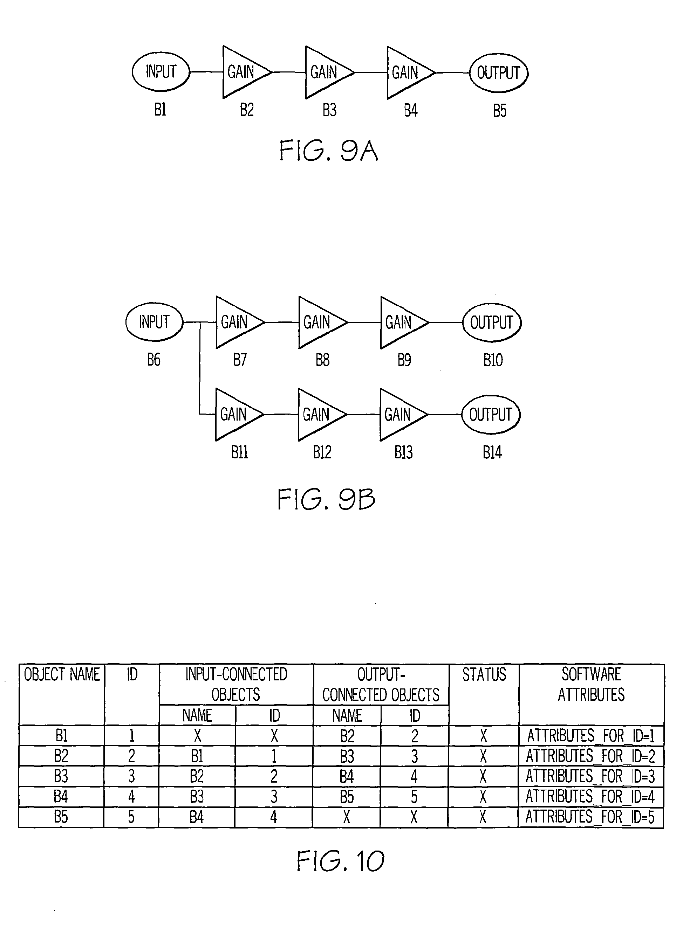

The above-described method will now be illustrated for two different examples of graphical program modification. FIGS. 6A and 6B respectively depict original and modified versions of a first exemplary graphical program; and FIGS. 9A and 9B respectively depict original and modified versions of a second exemplary graphical program. FIG. 7 depicts DTorg for the original graphical program of FIG. 6A, and FIGS. 8A-8E depict successive steps in the formation of DTmod for the modified graphical program of FIG. 6B. FIG. 10 depicts DTorg for the original graphical program of FIG. 9A, and FIGS. 11A-11F depict successive steps in the formation of DTmod for the modified graphical program of FIG. 9B.

Referring to FIGS. 6A-6B, the original version of the first exemplary graphical program comprises the objects B1-B4; and the modified version comprises the objects B5-B12. In creating the modified version, the object B5 was formed by reproducing (i.e., Copy & Paste) object B1. Similarly, objects B6, B7 and B9, B10 were formed by reproducing objects B2, B3; and objects B8 and B12 were formed by reproducing object B4. The summation object B11 was selected from the object library of the graphical program.

FIG. 7 illustrates the data table DTorg describing the objects B1-B4 of the original version of the graphical program depicted in FIG. 6A. The objects B1-B4 are assigned the ID codes 1-4, respectively, and the software attributes for each object are specified by software specialist 14. The Input ID and Output ID columns describe the neighboring connections; for example, the object B2 has object B1 (ID = 1) as an input, and object B3 (ID = 3) as an output. The letter X indicates a value that is unknown or not applicable.

The data table DTmod describing the objects B5-B12 of the modified version of the graphical program depicted in FIG. 6B is generated in a series of stages corresponding to various blocks of the flow diagram of FIGS. 5A-5B. The initial stage (corresponding to flow diagram block 104) is the creation of a table of the proper size with Object Names, IDs and interconnections between the objects extracted from the modified graphical program, as depicted in FIG. 8A. Objects in the modified graphical program that are created by reproducing objects from the original graphical program retain the ID codes assigned to the respective objects from the original graphical program. Thus, object B5 is assigned the ID code "1", objects B6 and B9 are assigned the ID code "2", objects B7 and B10 are assigned the ID code "3", and objects B8 and B12 are assigned the ID code "4". The object B11 was not formed by reproducing an object in the original program, and therefore has no ID code at this stage.

The second stage in the generation of DTmod (corresponding to flow diagram blocks 104-114) is depicted in FIG. 8B. Since the object B11 lacked an ID code at the initial stage, its Status is set to New and it is assigned a new ID code (5). This new ID code is also copied into the Input-Connection column for object B12 and the Output-Connection column for objects B7 and B10. Objects B5-B8 have the same ID codes as original objects B1-B4, and the IDs of their neighbors match; accordingly, the Status of objects B5-B8 is set to Matched. Also, objects B6 and B9 have the same ID code (2) as object B2; since the IDs of their neighbors also match, the Status of objects B6 and B9 is set to Matched. Though the object B10 has the same ID code (3) as the object B3, the IDs of their neighbors do not match; accordingly, the Status of object B10 is set to Partial and a new ID code (6) is assigned to it. Similarly, object B12 and object B8 have the same ID code (4); since the IDs of their neighbors likewise do not match, the Status of object B12 is set to Partial and a new ID code (7) is assigned to it. The corresponding ID codes are also changed in the Input-Connection and the Output-Connection columns as indicated.

The third stage in the generation of DTmod (corresponding to flow diagram blocks 116-122) is depicted in FIG. 8C. Objects B6 and B9 have the same ID code (2) and the Status of both is Matched; since object B9 has a neighboring object B10 whose Status is Partial, the Status of object B9 is changed to Conflict. The Status of object B6 is unchanged. The next iteration of blocks 118-122 does not produce any changes in the Status of the same-ID objects B6 and B9.

The fourth stage in the generation of DTmod (corresponding to flow diagram blocks 124-134) is depicted in FIG. 8D. Since the Status of object B9 is Conflict, the software attributes of object B2 can be copied into DTmod (ID Code = 2) if approved by software specialist 14. Also, a new ID code (8) is assigned to object B9 due to its Conflict Status.

The fifth stage in the generation of DTmod (corresponding to flow diagram block 130) is depicted in FIG. 8E. Since the Status of objects B5-B8 is Matched, the software attributes for those objects are copied from DTorg to DTmod. Thereafter, the modified auto-code ready graphical program 22 is populated with the data from the Software Attributes column of DTmod based on the object ID codes 1-4.

Referring to FIGS. 9A-9B, the current version of the second exemplary graphical program comprises the objects B1-B5; and the modified version comprises the objects B6-B14. In creating the modified version, objects B6-B9 were formed by reproducing (i.e., by Copy & Paste) objects B1-B4, respectively; and objects B11-B14 were formed by reproducing objects B2-B5, respectively. The output object B10 was selected from the object library of the graphical program.

Referring to FIG. 10, DTorg describes the objects B1-B5 of the original version of the graphical program depicted in FIG. 9A. The objects B1-B5 are assigned the ID codes 1-5, respectively, and the software attributes for each object are specified by software specialist 14. The Input-Connection and Output-Connection columns describe the neighboring connections, and the letter X indicates a value that is unknown or not applicable.

The data table DTmod is generated in a series of stages corresponding to various blocks of the flow diagram of FIGS. 5A-5B. The initial stage (corresponding to flow diagram block 104-106) is the creation of a table of the proper size with Object Names, IDs and interconnections between the objects extracted from the modified graphical program, as depicted in FIG. 11A. Objects in the modified graphical program that are created by reproducing objects from the original graphical program retain the ID codes assigned to the respective objects from the original graphical program. Thus, object B6 is assigned the ID code "1"; objects B7 and B11 are assigned the ID code "2"; objects B8 and B12 are assigned the ID code "3"; objects B9 and B13 are assigned the ID code "4"; and object B14 is assigned the ID code "5". Since the ID code entry for object B10 is empty, its Status is set to New and it is assigned a new ID code (6). This new ID code is also copied into the Output-Connection column for object B9, as indicated.

The second stage in the generation of DTmod (corresponding to flow diagram blocks 108-114) is depicted in FIG. 11B. Objects B6-B8 have the same ID codes as original objects B1-B3, and the IDs of their neighbors match; accordingly, the Status of objects B6-B8 is set to Matched. Similarly, objects B11-B14 have the same ID codes as original objects B2-B5, and the IDs of their neighbors match; accordingly, the Status of objects B11-B14 is set to Matched. Though the object B9 has the same ID code (4) as the object B4, the IDs of their neighbors do not match; accordingly, the Status of object B9 is set to Partial and a new ID code (7) is assigned to it. The new ID code (7) for object B9 is also changed in the Input-Connection and the Output-Connection columns as indicated.

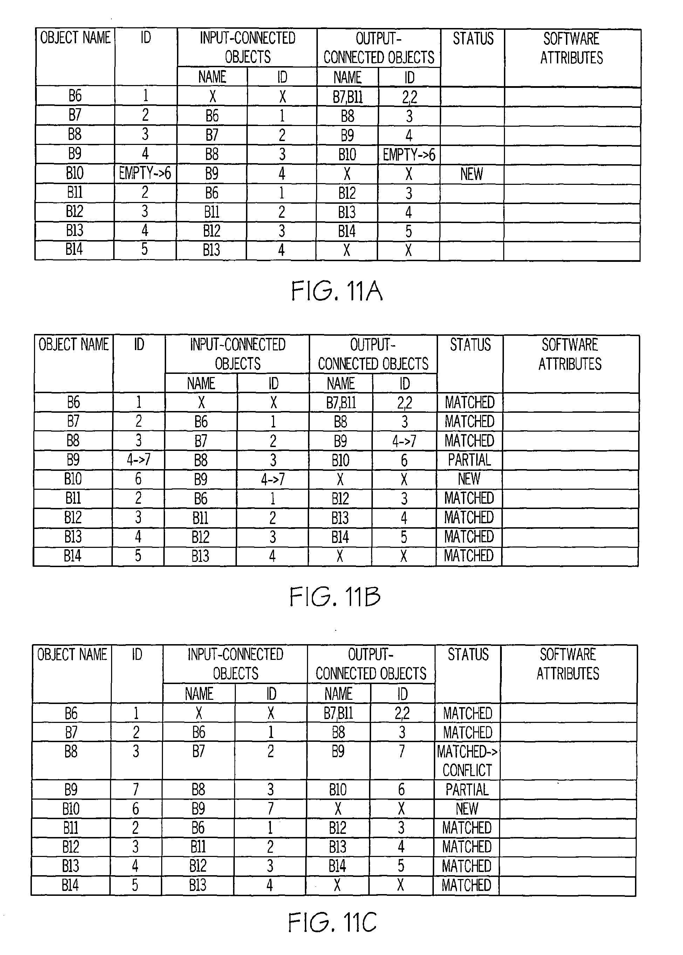

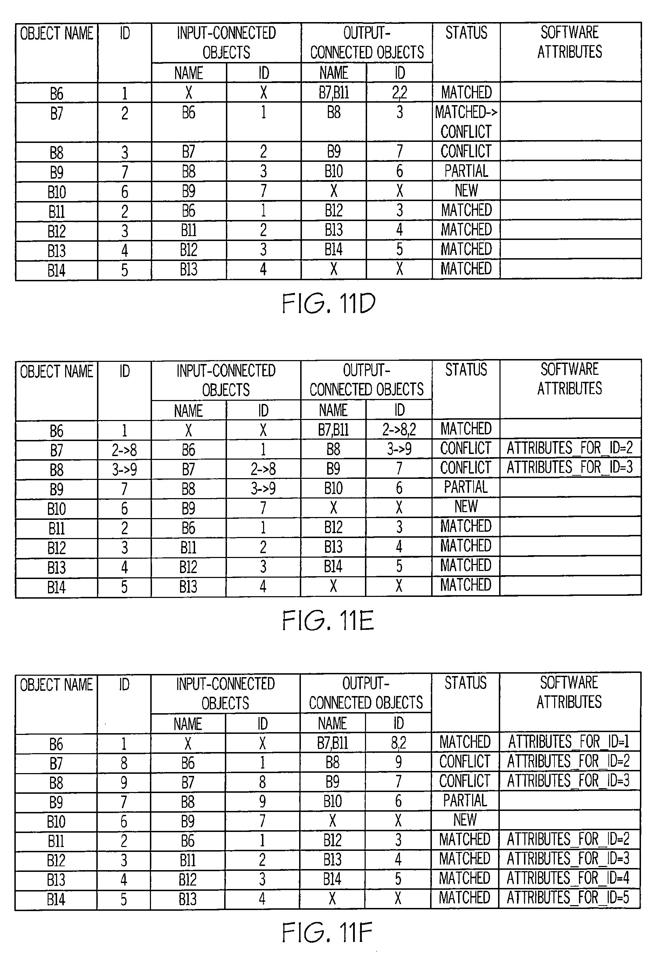

The third stage in the generation of DTmod (corresponding to flow diagram blocks 116-122) is depicted in FIG. 11C. Objects B8 and B12 have the same ID code (3) and the Status of both is Matched; since object B8 has a neighboring object B9 whose Status is Partial, the Status of object B8 is changed to Conflict as indicated. Objects B7 and B11 have the same ID code (2) and the Status of both is Matched; however, the Status of their neighbors is Matched, so there is no change in Status of objects B7 or B11.

The fourth stage in the generation of DTmod is depicted in FIG. 11D, and corresponds to the second recursive execution of flow diagram block 118. Due to the Status change of object B8 in the preceding stage, objects B7 and B11 satisfy the constraints of flow diagram block 118. That is, objects B7 and B11 have the same ID code (2) and the Status of both is Matched; since object B7 has a neighboring object B8 whose Status is Conflict, the Status of object B7 is changed to Conflict as indicated. Further recursive execution of flow diagram block 118 does not change the Status of any object, and flow diagram block 122 is eventually answered in the negative.

The fifth stage in the generation of DTmod (corresponding to flow diagram blocks 126-132) is depicted in FIG. 11E. Since the Status of objects B7-B8 is Conflict, the software attributes from DTorg can be copied into DTmod based on ID codes if approved by software specialist 14, whereafter new ID codes (8 and 9) are assigned to objects B7 and B8.

The sixth stage in the generation of DTmod (corresponding to flow diagram block 134) is depicted in FIG. 11F. Since the Status of objects B6 and B11-B14 are Matched, the software attributes from DTorg are copied into DTmod based on the assigned ID code. Finally, the modified auto-code ready graphical program 22 is populated with Software Attributes from DTmod based on the object names B6-B14.

In summary, the method of this invention automates the reuse of the software attributes of graphical objects in a graphical program. The method is preferably implemented in parallel with the graphical program so that the software attributes for the original graphical program 10 are re-used in the next version of the graphical program at the same time as the modified graphical program 20 is being developed. The method allows merging of the software attributes for the original graphical program 10 with the new graphical program 20 for all carryover objects (Matched) and for duplicated clusters of the objects (Conflict), eliminating delays inherent in the traditional (i.e., serial) development process. Additionally, the method maintains the software attributes apart from the graphical program tool. This allows the user of a third-party graphical program tool to maintain confidentiality of the program. Additionally, the method can maintain several sets of software attributes, for different target processors for example, and install them into the same graphical program for generating high-level programming language for the graphical program.

While the present invention has been described with respect to the illustrated embodiment, it is recognized that numerous modifications and variations in addition to those mentioned herein will occur to those skilled in the art. Accordingly, it is intended that the invention not be limited to the disclosed embodiment, but that it have the full scope permitted by the language of the following claims.

## Claims

1. A method of reusing software attributes assigned to graphical objects of a first version (10) of a graphical program in a second version (20) of said graphical program, where said second version (20) includes one or more graphical objects corresponding to the graphical objects of said first version (10), the method comprising the steps of:
assigning unique static ID codes (102) to the graphical objects of said first version (10), said applying said static ID codes (104) to corresponding graphical objects of said second version (20);
assigning a unique static ID code (106) to each graphical object of said second version (20) that does not correspond to a graphical object of said first version (10);
identifying matching graphical objects in said first and second versions (10, 20) based on the assigned static ID codes (108), and assigning new unique static ID codes to non-matching graphical objects of said second version (112); and
identifying pairs of graphical objects in said first and second versions (10, 20) whose static ID codes match (110), and for each such pair of graphical objects, applying the software attributes assigned to the graphical object of said first version to the graphical object of said second version (134).

2. The method of claim 1, where the step of identifying matching graphical objects in said first and second versions (10, 20) includes the steps of:
identifying pairs of graphical objects in said first and second versions whose static ID codes match (108); and
for each such pair of graphical objects:
identifying neighboring graphical objects that are input-coupled and output-coupled to graphical objects of the pair (108);
designating the graphical object of the second version as a matching object if the static ID codes assigned to the neighboring objects of the pair of graphical objects match (110, 114); and
designating the graphical object of the second version as a non-matching object if the static ID codes assigned to the neighboring objects of the pair of graphical objects do not match (110, 112).

3. The method of claim 2, where the static ID codes assigned to neighboring objects of an identified pair of graphical objects match if the neighboring object ID codes of the first version object are also found in the neighboring object ID codes of the second version object (110).

4. The method of claim 2, including the steps of:
(a) determining if two or more graphical objects of the second version that are designated as matching objects have the same static ID code (116, 118); and
(b) re-designating any such graphical objects as a non-matching conflict object if at least one of its neighboring graphical objects is designated as a non-matching object (118).

5. The method of claim 4, including the step of:
repeating steps (a) and (b) until no further graphical objects are re-designated as non-matching conflict objects (120, 122).

6. The method of claim 5, including the steps of:
identifying a first version graphical object that corresponds to second version graphical object that has been designated as a non-matching conflict object, and applying the software attributes assigned to the identified first version graphical object to the corresponding second version graphical object (130).

7. The method of claim 5, including the steps of:
determining if two or more graphical objects of the second version that are designated as matching objects have the same static ID code (126, 128); and
re-designating any such graphical objects as a non-matching conflict object (28).

8. The method of claim 7, including the steps of:
identifying a first version graphical object that corresponds to second version graphical object that has been designated as a non-matching conflict object, and applying the software attributes assigned to the identified first version graphical object to the corresponding second version graphical object (130).

9. The method of claim 5, including the step of:
assigning new unique static ID codes to graphical objects of said second version that have been designated as non-matching conflict objects (132).

10. The method of claim 1, including the steps of:
storing the assigned static ID codes and the applied software attributes in a data table (102, 104); and
transferring the stored software attributes to the second version (20) of said graphical program based on the assigned static ID codes (30).
